# EUROPÄISCHE PATENTSCHRIFT

(11) **EP 1 855 042 B1**
(45) Veröffentlichungstag und Bekanntmachung des Hinweises auf die Patenterteilung: **02.05.2012**
(21) Anmeldenummer: 07008821.6
(22) Anmeldetag: 02.05.2007
(51) Int. Cl.: F16L 11/08

(54) **Schlauchleitung zum Durchleiten von Fluiden**
Fluid conveying hose
Conduite flexible transportant des liquides

(30) Priorität: 10.05.2006 DE 102006021665
(43) Veröffentlichungstag der Anmeldung: 14.11.2007
(73) Patentinhaber: REHAU AG + Co, 95111 Rehau (DE)
(72) Erfinder: Herrmann, Dieter, 95448 Bayreuth (DE); Schörner, Georg, 95111 Rehau (DE)

(56) Entgegenhaltungen:
- WO-A-99/02910
- DE-U- 1 960 554
- JP-A- 8 207 110
- US-A- 3 060 973
- US-A- 3 500 867
- US-A- 4 308 895
- US-A- 4 343 333
- US-A- 5 381 834
- US-A- 5 613 523
- US-A- 5 744 206
- US-B1- 6 305 423
- US-B2- 6 978 805

## Beschreibung

Die Erfindung betrifft eine Schlauchleitung gemäß Oberbegriff des Anspruchs 1, siehe US 5,613,523 B1.

Schlauchleitungen, die aus einem Grundschlauch und um den Grundschlauch gewickelten oder geflochtenen Strängen bestehen, sind bei einer Vielzahl von Schläuchen zum Durchleiten von unter Druck stehenden Fluiden bekannt. Mit Hilfe der gewickelten oder geflochtenen Stränge wird die Druckfestigkeit der Schlauchleitungen im Gegensatz zu Schlauchleitungen ohne gewickelte oder geflochtene Schlauchhülle erhöht. Dabei bestehen die um den Grundschlauch gewickelten oder geflochtenen Stränge der Schlauchhülle in der Regel nur aus Fäden/Filamenten eines Werkstoffs. Ein Nachteil dieser Schlauchleitungen wird darin gesehen, dass die Stränge durch die Eigenschaften der Fäden/Filamente nur definierte Reißfestigkeiten aufweisen.

Eine weitere Schlauchleitung ist aus der US 3 060 973 bekannt. Die Entgegenhaltung zeigt Stränge mit einem zentralen Faden aus beispielsweise Nylon oder Dacron sowie um den zentralen Faden gewickelten Fasern aus z.B. Baumwolle. Die US 6 978 805 zeigt eine Schlaucharmierung, die aus Strängen mit elektrisch leitfähigen und nicht leitfähigen Fasern besteht.

Bei der Erfindung gemäß Anspruch 1 können die Eigenschaften, wie z. B. die Reißfestigkeit, einzelner oder aller Stränge auf die Einsatzanforderungen der Schlauchleitung angepasst werden, indem sich mindestens einer der um den Grundschlauch geflochtenen Stränge aus Polyesterfasern einerseits und Aramidfasern andererseits zusammensetzt, so dass eine Hybridstruktur des Stranges entsteht.

Dadurch können z. B. teure Aramidfasern mit einer hohen Reißfestigkeit durch eine teilweise Mischung mit billigeren Polyesterfasern mit geringerer Reißfestigkeit in einem Strang ersetzt werden, wenn die Schlauchleitung für das Standhalten des Berstdruckes eine Reißfestigkeit benötigt, die zwischen den beiden genannten Werkstoffen liegt.

Die Druckfestigkeit der Schlauchleitung lässt sich somit nicht nur über die Knoten der Flechtfelder pro Fläche und die Anzahl der Fäden oder Filamente (in folgenden "Füders/Filamente" genannt) pro Strang einstellen, sondern auch über die Auswahl der in einem Strang zusammengefassten Fasern unterschiedlicher Werkstoffe. Wird die Flechtfelderzahl pro Fläche und die Anzahl der Fasern pro Strang konstant gehalten, dann kann die Druckfestigkeit einer Schlauchleitung zwischen den Grenzwerten, die durch eine Umflechtung der Schlauchleitung mit Strängen, die nur aus Polyesterfasern bzw. nur aus Aramidfasern bestehen, variiert werden.

Durch den Einsatz mehrerer unterschiedlicher Faden-/Filamentwerkstoffe in einem Strang fallen die sonst üblichen mehrfachen Schlaucharmierungen mit verschiedenen Fäden/Filamenten unterschiedlicher Werkstoffe weg.

In einer weiteren vorteilhaften Ausbildung der Erfindung enthält mindestens ein um den Grundschlauch geflochtener Strang einen elektrisch leitfähigen Draht. Mit Hilfe des eingewickelten oder eingeflochtenen elektrisch leitfähigen Drahtes ist es möglich, das im Lumen des Grundschlauchs unter Druck stehende Fluid zu Beheizen.

Um den Schlauch mit dem in mindestens einem Strang eingebrachten elektrisch leitfähigen Draht zu beheizen, ist ein elektrischer Anschluss des Drahtes notwendig. Dieser elektrische Anschluss wird bevorzugt durch die Konnektoren, die wiederum elektrisch angeschlossen sind, hergestellt.

In einer weiteren ebenfalls vorteilhaften Ausgestaltung der Erfindung weist mindestens ein um den Grundschlauch geflochtener Strang mindestens einen Faden bzw. ein Filament auf, mit dem eine Überbeanspruchung der Schlauchleitung, d. h. eine Überschreitung eines Grenzwertes für den Fluiddruck, der unterhalb der minimalen Berstdruckgrenze liegt, anzeigt werden kann.

Dieser Faden oder dieses Filament kann z. B. so ausgebildet sein, dass dieser Faden oder dieses Filament bei Überbeanspruchung vor dem Bersten der Schlauchleitung reißt und somit dieser gerissene Faden oder dieses gerissene Filament bei einer Kontrolle der Schlauchleitung die Schädigung anzeigt.

Vorteilhafter ist es jedoch, einen elektrisch leitfähigen Draht zur Anzeige einer Überbeanspruchung zu verwenden. Dabei kann zum einen der Bruch des Drahtes durch eine Stromunterbrechung in einer elektrischen Schaltung ausgewertet werden oder zum anderen eine Widerstandsänderung des Schlauches Aufschluss über die Beanspruchung der Schlauchleitung geben. Mit dieser Information kann über eine Steuereinrichtung der Druck der Schlauchleitung reduziert bzw. begrenzt werden. Somit ist es möglich, einen weiteren Druckaufbau in der Schlauchleitung zu unterbinden, wodurch ein Bersten der Schlauchleitung verhindert werden kann.

Vorzugsweise sind alle um den Grundschlauch geflochtenen Stränge aus unterschiedlichen Werkstoffen zusammengesetzt. Damit kann die Druckfestigkeit der Schlauchleitung durch die Zusammensetzung der Stränge aus Fäden/Filamenten unterschiedlicher Werkstoffe zwischen den Grenzwerten einer Schlauchleitung aus nur einem der verwendeten Werkstoffe variiert werden. Es ist dabei auch möglich, dass alle um den Grundschlauch geflochtenen Stränge aus der gleichen Anzahl Fäden/Filamente unterschiedlicher Werkstoffe bestehen.

Im Rahmen dieser Erfindung hat sich gezeigt, dass für eine antimikrobielle Ausgestaltung der Schlauchleitung einzelne Fäden/Filament vorteilhaft Ionen und/oder Verbindungen der Metalle: Silber, Zink, Kupfer, Zinn oder Chrom, oder quartäre Ammoniumverbindungen enthalten.

Erfindungsgemäß ist es vorgesehen den Grundschlauch nach dem Umflechten mit den Strängen mit einem Klebstoff zu versehen. Damit werden die Fäden/Filamente, insbesondere im Bereich der Flechtknoten, geschützt. Auch wird damit gewährleistet, dass die Flechtung der um den Grundschlauch geflochtenen Stränge beim Ablängen/Abschneiden des Schlauches erhalten bleibt. Vorteilhafterweise wird durch den Klebstoff auch erreicht, dass die Fäden/Filamente am Aufquellen durch den Kontakt mit einer Umgebungsflüssigkeit gehindert werden.

In diesem Zusammenhang wird der Klebstoff auch zur Fixierung des Geflechts aus den einzelnen Strängen auf der polymeren Grundschlauchoberfläche verwendet.

Der für die Schlauchleitung verwendete Schlauch, aus Grundschlauch und um den Grundschlauch geflochtenen Strängen, weist bevorzugt eine Deckschicht aus polymerem Werkstoff auf. Damit kann der Schlauch gegen äußere mechanische und/oder chemische Einflüsse geschützt werden. Die polymere Deckschicht kann auch als Isolation für einen elektrischen Leiter dienen, der selbst keine Ummantelung aufweisen muss.
Von Vorteil kann es sein, dass der Grundschlauch und/oder die Deckschicht aus mehreren polymeren Schichten bestehen.

Die Erfindung soll nun an nicht einschränkenden Ausführungsbeispielen näher beschrieben werden.

Es zeigt:
- Figur 1 -: Ausschnitt einer Schlauchleitung;
- Figur 2 -: Querschnitt durch einen Fadenstrang;
- Figur 3 -: Querschnitt durch einen Fadenstrang mit elektrisch leitfähigem Faden/Filament.

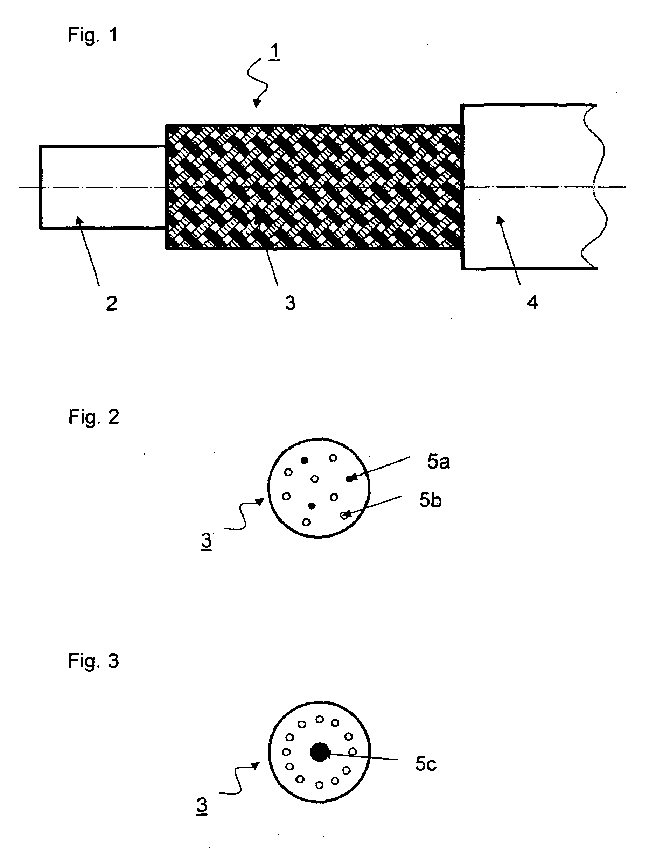

In Figur 1 ist ein Ausschnitt aus einem Schlauchabschnitt 1 dargestellt. Dabei besteht der Grundschlauch 2 aus Silikon mit einer Härte von ca. 70 Shore A.

Dieser Grundschlauch 2 ist mit 12 Einzelsträngen 3 umflochten, wobei alle Stränge 3 zu ca. 28 % aus Polyesterfäden und zu ca. 72 % aus Aramidfäden bestehen. Da die Druckfestigkeit einer Aramidfaser ca. 2,4-mal so groß ist wie die einer Polyesterfaser, ergibt sich mit dieser Kombination der beiden Fasern in einem Strang 3 eine Druckfestigkeit, die ca. das Doppelte der Druckfestigkeit der Polyesterfaser beträgt. Die Kosten für eine derartige Umflechtung stehen jedoch in einem günstigeren Verhältnis, da die Aramidfasern erheblich teurer sind als die Polyesterfasern. Das Geflecht aus den Einzelsträngen 3 ist mit dem Grundschlauch 2 durch eine Verklebung verbunden und mit einer dünnen Silikontränkung versehen. Durch diese Ausführung ist beim Ablängen des Schlauchs in die entsprechenden Schlauchlängen gewährleistet, dass die geflochtene Anordnung der Stränge 3 erhalten bleibt.

Zum Schutz des Schlauchabschnittes 1 vor äußeren Beschädigungen während des Einsatzes ist es auch möglich, auf die um den Grundschlauch 2 geflochtenen Stränge 3 eine Deckschicht 4 aufzubringen. Dabei kann in und/oder auf die Deckschicht 4 auch ein Dekor ein/aufgebracht werden.

In einem Querschnitt durch einen Fadenstrang 3 in Figur 2 ist beispielhaft dargestellt, dass die Fäden 5a, 5b aus unterschiedlichen Werkstoffen nicht gleichmäßig im Querschnitt verteilt sind. Bei dieser Ausführungsform bestehen die einzelnen Fäden 5a, 5b aus mehreren miteinander verdrehten Filamenten. Es ist aber auch möglich Fäden 5a, 5b einzusetzen, bei denen die einzelnen Filamente miteinander verflochten oder verwoben sind. Durch diese Anordnung wird erreicht, dass die Kraftübertragung im Stranggeflecht gleichmäßig auf alle Filament erfolgt.

Durch die Auswahl des Durchmessers der einzelnen Fäden/Filamente 5a, 5b ist es möglich, die Flexibilität des Schlauchabschnittes 1 entsprechend den Anforderungen an die Einsatzbedingungen der Schlauchleitung zu variieren. Dabei nimmt mit kleinerem Faden-/Filamentdurchmesser die Flexibilität der Schlauchleitung zu.

Durch unterschiedliche Faden-/Filamentwerkstoffe mit unterschiedlicher Farbgestaltung entsteht durch das Verflechten um den Grundschlauch 2 Muster auf dem Schlauchabschnitt 1. Um dies auch nach dem Aufbringen einer möglichen Deckschicht 4 noch an der Oberfläche zu sehen, ist es in diesem Fall sinnvoll, die Deckschicht 4 aus einem transparenten Material zu fertigen.

In Figur 3 ist ein Querschnitt durch einen Strang 3 dargestellt, wobei in dem Strang 3 ein elektrisch leitender Faden/Filament 5c eingebracht ist. Dieser besteht in dieser Ausführung aus einem metallischen Werkstoff. Es sind aber auch andere elektrisch leitfähige Werkstoffe für diesen Faden/Filament 5c möglich. Mit Hilfe dieses elektrischen Leiters 5c kann der Schlauchabschnitt 1 nach dem Anschließen des Leiters 5c an eine Spannungsquelle beheizt werden.
Dieser elektrisch leitende Faden/Filament 5c kann aber auch zum Anzeigen einer Überbelastung der Schlauchleitung verwendet werden. Dabei kann zum einen über eine Widerstandsänderung in dem mit dem Leiter 5c verbundenen Stromkreis eine Aufzeichnung der Belastung durchgeführt werden oder aber der Leiter 5c wird so eingesetzt, dass er bei einer Überbeanspruchung der Schlauchleitung reißt und ein Stromkreis unterbrochen wird. Diese Information kann über ein elektronisches Steuergerät ausgewertet und weitere Maßnahmen eingeleitet werden.

## Patentansprüche

1. Schlauhleitung zum Durchleiten von Fluiden mit einem zwei Konnektoren verbindenden Schlauchabschnitt (1), der aus einem aus Silikon bestehenden Grundschlauch (2) und um den Grundschlauch (2) geflochtenen Strängen (3) einzeiner Fäden oder Filamente (5a, 5b, 5c) besteht, **dadurch gekennzeichnet, dass** sich mindestens einer der um den Grundschlauch (2) geflochtenen Stränge (3) aus Fäden oder ilamenten (5a, 5b, 5c) unterschiedlicher Werkstoffe oder Werkstoffmischungen zusammensetzt, wobei dieser Strang (3) synthetische Polymerfasern aus Polyester einerseits und aus Aramid andererseits (5a, 5b) aufweist, und wobei der Grundschlauch (2) nach dem Umflechten mit den Strängen (3) mit einem Klebstoff versehen ist, so dass die Flechtknoten geschützt sind, die Flechtung auch beim Ablängen der Schlauchleitung erhalten bleibt und ein Kontakt und damit ein Aufquellen der Fäden oder Filamente (5a, 5b, 5c) durch Umgebungsflüssigkeit verhindert ist.

2. Schlauchleitung nach Anspruch 1, **dadurch gekennzeichnet, dass** in mindestens einem der um den Grundschlauch (2) geflochtenen Stränge (3) ein elektrisch leitfähiger Draht (5c) eingebracht ist.

3. Schlauchleitung nach zumindest einem der vorhergehenden Ansprüche, **dadurch gekennzeichnet, dass** in mindestens einem der um den Grundschlauch (2) geflochtenen Stränge (3) mindestens ein Faden oder Filament (5a, 5b, 5c) enthalten ist, das eine Überbeanspruchung der Schlauchleitung anzeigt.

4. Schlauchleitung nach zumindest einem der vorhergehenden Ansprüche, **dadurch gekennzeichnet, dass** alle um den Grundschlauch (2) geflochtenen Stränge (3) aus mindestens zwei Fäden oder Filamente (5a, 5b, 5c) unterschiedlicher Werkstoffe zusammengesetzt sind.

5. Schlauchleitung nach zumindest einem der vorherigen Ansprüche, **dadurch gekennzeichnet, dass** zumindest ein Faden oder Filament (5a, 5b, 5c) antimikrobiell wirkt.

6. Schlauchleitung nach zumindest einem der vorhergehenden Ansprüche, **dadurch gekennzeichnet, dass** der Schlauchabschnitt (1) mindestens eine polymere Deckschicht (4) aufweist.

## Claims

1. Hoseline for the conduction of fluids, with a hose portion (1) which connects two connectors and which is composed of a silicone-composed basic hose (2) and of strands (3) of individual threads or filaments. (5a, 5b, 5c), the said strands being braided around the basic hose (2), **characterized in that** at least one of the strands (3) of threads or filaments (5a, 5b, 5c) braided around the basic hose (2) is composed of different materials or material mixtures, this strand (3) having synthetic polymer fibres made from polyester, on the one hand, and from aramid, on the other hand, (5a, 5b), and the basic hose (2), after being braided around with the strands (3), being provided with an adhesive, so that the braiding knots are protested, the braiding is preserved even when the hoseline is cut to length, and contact with the threads or filaments (5a, 5b, 5c) by surrounding liquid and consequently swelling of these are prevented.

2. Hoseline according to Claim 1, **characterized in that** an electrically conductive wire (5c) is introduced in at least one of the strands (3) braided around the basic hose (2).

3. Hoseline according to at least one of the preceding claims, **characterized in that** at least one of the strands (3) braided around the basic hose (2) contains at least one thread or filament (5a, 5b, 5c) which indicates overstressing of the hoseline.

4. Hoseline according to at least one of the preceding claims, **characterized in that** all the strands (3) braided around the basic hose (2) are composed of at least two threads or filaments (5a, 5b, 5c) of different materials.

5. Hoseline according to at least one of the preceding claims, **characterized in that** at least one thread or filament (5a, 5b, 5c) has an antimicrobial action.

6. Hoseline according to at least one of the preceding claims, **characterized in that** the hose portion (1) has at least one polymeric covering layer (4).

## Revendications

1. Conduite flexible pour le transport de liquides avec une section de tuyau flexible (1) reliant deux connecteurs, qui se compose d'un tuyau flexible de base (2) constitué de silicone et de cordons (3) de fils ou de filaments individuels (5a, 5b, 5c) tresses autour du tuyau flexible de base (2), **caractérisée en ce qu'**au moins un des cordons (3) tressés autour du tuyau flexible de base (2) est composé de fils ou de filament (5a, 5b, 5c) de différents matériaux ou mélanges de matériaux, dans laquelle ce cordon (3) présente des fibres polymères synthétiques en polyester d'une part et en aramide d'autre part (5a, 5b), et dans laquelle le tuyau flexible de base (2) est muni d'une colle après l'enrobage tressé avec les cordons (3), de telle manière que les noeuds tressés soient protégés, que le tressage soit conservé même après une coupe à longueur de la conduite flexible et qu'un contact et dès lors un gonflement des fils ou des filaments (5a, 5b, 5c) par le liquide environnant soit empêché.

2. Conduite flexible selon la revendication 1, **caractérisée en ce qu'**un fil électriquement conducteur (5c) est introduit dans au moins un des cordons (3) tressès autour du tuyau flexible de base (2).

3. Conduite flexible selon au moins une des revendications précédentes, **caractérisée en ce qu'**au moins un fil ou un filament (5a, 5b, 5c), qui indique une surcharge de la conduite flexible, est contenu dans au moins un des cordons (3) tressés autour du tuyau flexible de base (2).

4. Conduite flexible selon au moins une des revendications précédentes, **caractérisée** et ce que tous les cordons (3) tressés autour du tuyau flexible de base (2) sont composés d'au moins deux fils ou filaments (5a, 5b, 5c) de différents matériaux.

5. Conduite flexible selon au moins une des revendications précédentes, **caractérisée en ce qu'**au moins un fil ou un filament (5a, 5b, 5c) a une action anti-microbienne.

6. Conduite flexible selon au moins une des revendications précédentes, **caractérisée en ce que** la section de tuyau flexible (1) présente au moins une couche de recouvrement polymère (4).
